# EUROPÄISCHE PATENTSCHRIFT

(11) **EP 0 499 047 B1**
(45) Veröffentlichungstag und Bekanntmachung des Hinweises auf die Patenterteilung: **22.03.1995**
(21) Anmeldenummer: 92100862.9
(22) Anmeldetag: 20.01.1992
(51) Int. Cl.: F16H 61/02

(54) **Elektro-hydraulische Steuerung für ein Automatgetriebe**
Electro-hydraulic control for an automatic gearbox
Commande électro-hydraulique pour une transmission automatique

(30) Priorität: 14.02.1991 DE 4104490
(43) Veröffentlichungstag der Anmeldung: 19.08.1992
(73) Patentinhaber: Dr.Ing.h.c. F. Porsche Aktiengesellschaft, 70435 Stuttgart (DE)
(72) Erfinder: Petersmann, Joseph, Dipl.-Ing. (FH), W-7251 Wimsheim (DE)

(56) Entgegenhaltungen:
- DE-A- 3 934 674
- GB-A- 2 147 961
- US-A- 4 770 066
- US-A- 5 042 329
- ATZ 85 (1983) 6, Seiten 393 - 398 und 401 - 405

## Beschreibung

Die Erfindung betrifft eine elektro-hydraulische Steuerung für ein Automatgetriebe eines Kraftfahrzeugs nach dem Oberbegriff des Anspruchs 1.

Aus der Zeitschrift ATZ 85 (1983) 6, Seiten 393 bis 398 und 401 bis 405 ist ein 4-Gang-Automatgetriebe (Getriebe 4 P 22 der Firma ZF) bestehend aus einem Simpson-Satz mit nachgeschaltetem Overdrive und elektro-hydraulischer Steuerung bekannt. Ein Schaltplan für die elektro-hydraulische Steuerung ist in der Druckschrift 4 HP 22 E der ZF Getriebe GmbH Saarbrücken dargestellt. Mit dieser Steuerung wird in der Fahrstufe D und geschaltetem ersten Gang das Motormoment über einen Freilauf an die Getriebeausgangswelle weitergeleitet. Im Schubbetrieb wird der Freilauf überholt, so daß das Fahrzeug frei rollt und das Bremsmoment des Motors nicht übertragen werden kann.

Bei dieser und anderen bisher bekannt gewordenen Steuerungen ist es üblich, die Rückschaltung in den ersten Gang in der Fahrstufe D bei ca. 10 bis 30 km/h vorzunehmen. Der hydrodynamische Wandler des Automatgetriebes erlaubt es im normalen Fahrbetrieb, im zweiten Gang anzufahren, so daß der erste Gang nur in Extremsituationen benutzt werden muß.

Eine neue, elektrohydraulische Getriebesteuerung ermöglicht es jedoch, bei Lastschaltgetrieben manuell einen bestimmten Gang vorzugeben, so daß es nun möglich wäre, in der Fahrstufe D den ersten Gang unterhalb ca. 75 km/h einzulegen. Die im Gegensatz zum Handschaltgetriebe fehlende Bremsunterstützung durch den Motor würde jedoch den Fahrer zwingen, die Betriebsbremse zu verwenden, um seine Geschwindigkeit an die herrschende Verkehrssituation anzupassen. Aus diesem Grund ist ein derartiger Schaltvorgang vom zweiten in den ersten Gang mit einem Automatgetriebe herkömmlicher Bauart derzeit nicht möglich.

Die DE-39 34 674 A1 zeigt weiterhin eine elektrohydraulische Steuereinrichtung für ein Automatgetriebe, bei der eine den Kraftfluß im Schubbetrieb bei eingelegtem ersten Gang herstellende Kupplung nicht mechanisch durch den Wählhebel, sondern zeitweise vom Steuergerät über elektromagnetische Ventile zugeschaltet werden kann. Bedingungen für das Zuschalten der Kupplung werden nicht offenbart.

Es ist die Aufgabe der Erfindung, eine gattungsgemäße elektro-hydraulische Steuerung eines Automatgetriebes so weiterzubilden, daß auch in Stellung D des Wählschiebers im ersten Gang eine Übertragung des Schubmoments über das Getriebe auf den Motor, d.h. eine Schubanbindung des Motors, ohne nennenswerte Mehrkosten möglich wird.

Zur Lösung dieser Aufgabe dienen die kennzeichnenden Merkmale des Anspruchs 1. Weitere, die Erfindung ausgestaltende Merkmale, sind in den Unteransprüchen enthalten.

Der hauptsächliche Vorteil der vorliegenden Erfindung ist darin zu sehen, daß nun auch im ersten Gang in der Fahrstufe D die Bremswirkung des Motors ausgenutzt werden kann. Hierzu sind lediglich einfache konstruktive Maßnahmen erforderlich, die ohne nennenswerten Mehraufwand realisierbar sind. Der Gegenstand der Erfindung kann auch an vorhandenen Getrieben leicht verwirklicht werden.

Darüber hinaus zeichnet sich die Erfindung dadurch aus, daß die Bremswirkung des Motors im ersten Gang zu jedem Zeitpunkt vorhanden ist und somit das Verhalten des Fahrzeuges für den Fahrer vorhersehbar ist.

Ein Ausführungsbeispiel der Erfindung ist in der Zeichnung dargestellt und wird nachfolgend erläutert.

Es zeigen:
- Fig. 1: eine Ansicht eines 4-Gang-Automatgetriebes,
- Fig. 2: eine Tabelle über die eingeschalteten Kupplungen, Bremsen und Magnetventile,
- Fig. 3: ein Getriebeschema des 4-Gang-Automatgetriebes,
- Fig. 4: ein vereinfacht dargestelltes Steuer- und Ölführungsschema für die Fahrstufe D und geschaltetem ersten Gang in einer ersten Ausführung,
- Fig. 5: ein Schema nach Fig. 4 in einer zweiten Ausführung.

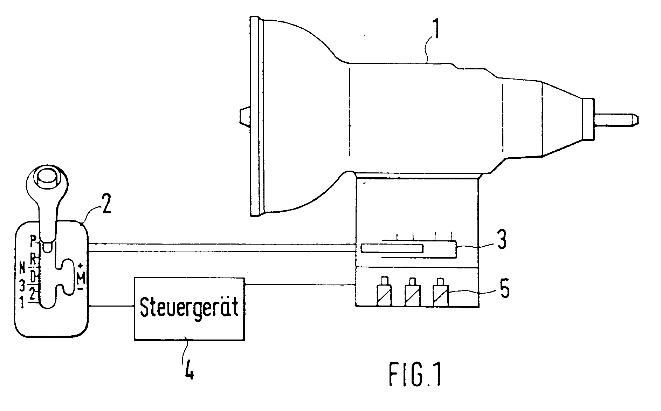

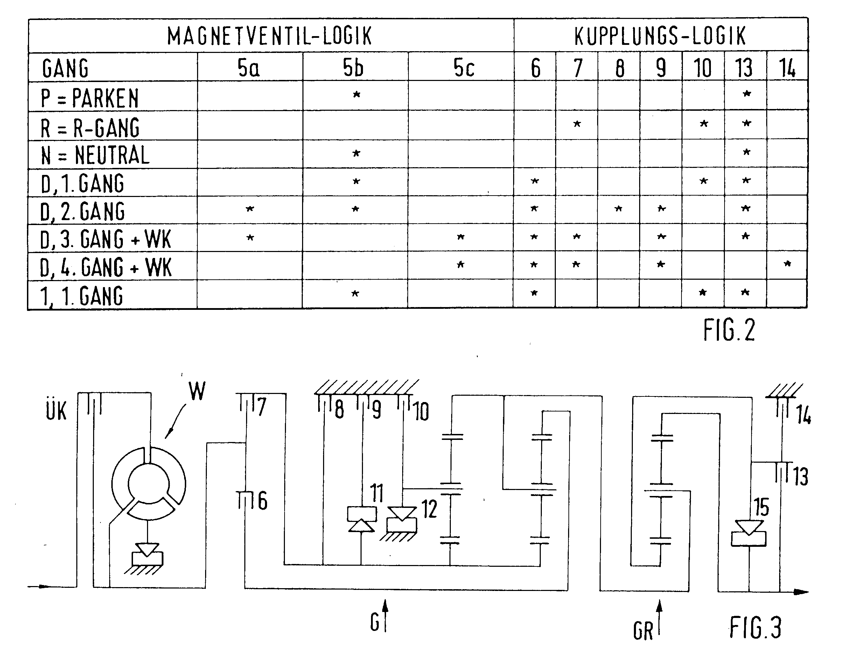

Das Automatgetriebe 1 nach Fig. 1 wird durch einen Wählhebel 2 betätigt, der mechanisch mit einem hydraulischen Schaltschieber 3 des Automatgetriebes 1 verbunden ist. Ein elektrisches Steuergerät 4 erfaßt die Stellung des Wählhebels 2 und steuert Magnetventile 5 des Automatgetriebes 1 nach der in Fig. 2 dargestellten Steuertabelle an.

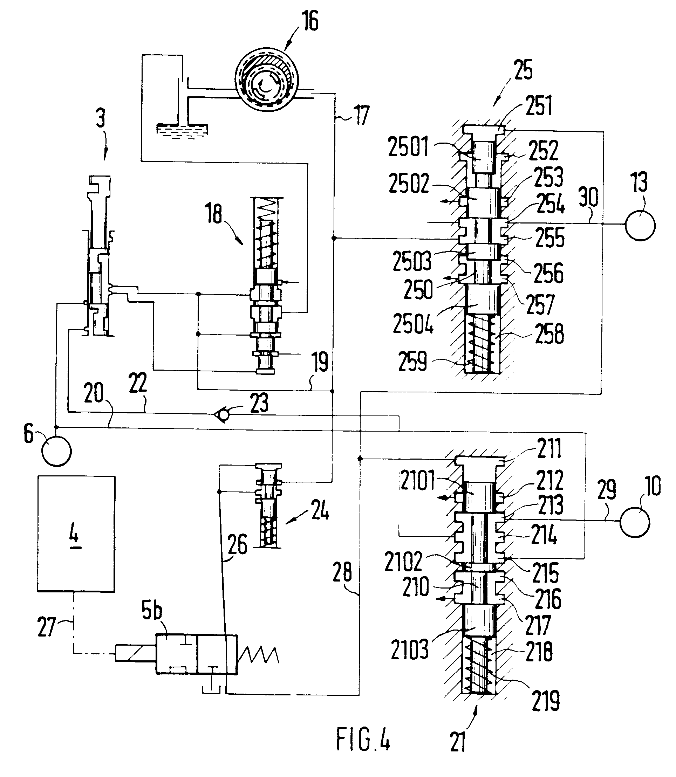

Wie Fig. 3 schematisch zeigt, wird das Automatgetriebe von einem nicht dargestellten Motor über einen hydro-dynamischen Drehmomentwandler W mit Überbrückungskupplung ÜK angetrieben und besteht aus einem Grundgetriebe (Simpson-Satz) G mit Kupplungen 6 und 7 sowie Bremsen 8, 9 und 10 und Freiläufen 11 und 12 sowie einem Gruppengetriebe GR1 für den vierten Gang mit einer Kupplung 13, einer Bremse 14 und einem Freilauf 15.

Aus der Tabelle nach Fig. 2 ist leicht ableitbar, welche Kupplungen und Bremsen 8 bis 10 und 13 bis 15 und Magnetventile 5 in den einzelnen Gängen geschlossen bzw. geöffnet sind. Letztere werden von einem elektronischen Steuergerät 4 ein- und ausgeschaltet und beaufschlagen indirekt und in Abhängigkeit von der Stellung des hydraulischen Schaltschiebers 3 die Kupplungen und Bremsen mit Systemdruck.

In dem vereinfacht dargestellten Steuerschema nach Fig. 4 ist eine Druckmittelquelle 16 über eine Leitung 17 mit einem Hauptdruckventil 18 sowie mit einem Systemdruckkanal 19 und dem Schaltschieber 3 verbunden. In der dargestellten Stellung für die Fahrstufe D stellt der Schaltschieber 3 über eine dritte Leitung 20 eine Verbindung des Systemdruckkanals 19 mit der Kupplung für die Vorwärtsfahrt 6 sowie mit einem fünften Ringraum 215 von einem 1-2-Schaltventil 21 her. Darüber hinaus ist der Schaltschieber 3 über eine erste Leitung 22 und ein Rückschlagventil 23 mit einem vierten Ringraum 214 vom 1-2-Schaltventil 21 verbunden; innnerhalb des Schaltschiebers 3 ist diese Verbindung entlüftet. Der Systemdruckkanal 19 hat einen Abzweig zu einem Druckreduzierventil 24 sowie zu einem fünften Ringraum 255 von einem 3-4-Schaltventil 25.

Vom Druckreduzierventil 24 werden über eine Steuerdruckleitung 26 die Magnetventile 5 mit Steuerdruck versorgt. Das zweite Magnetventil 5b wird vom elektronischen Steuergerät 4 über eine elektrische Steuerleitung 27 geschaltet und ist im nicht geschalteten Zustand entlüftet. Eine hydraulische Steuerleitung 28 führt vom zweiten Magnetventil 5b zu ersten stirnseitigen Ringräumen 211, 251 der Schaltventile 21, 25. Beide Schaltventile 21, 25 haben im Ventilgehäuse eingearbeitet mehrere Ringräume 211 bis 217, 251 bis 257 und je einen Kolbenschieber 210, 250, der von je einer in einem Federraum 218, 258 angeordneten Druckfeder 219, 259 in eine Endstellung gedrückt wird. Das 1-2-Schaltventil 21 hat noch eine Druckmittelverbindung vom dritten Ringraum 213 über eine zweite Leitung 29 zur Rückwartsgangbremse 10. Der zweite Ringraum 212 und der siebte Ringraum 217 haben eine Entlüftung und der Kolbenschieber 210 hat zur Bildung von Steuerkanten drei Steuerkolben 2101, 2102 und 2103.

Das 3-4-Schaltventil 25 hat noch eine Druckmittelverbindung vom vierten Ringraum 254 über eine Leitung 30 zur Kupplung 13 für den ersten bis dritten Gang und R-Gang. Der dritte und siebte Ringraum 253 und 257 haben eine Entlüftung und der Kolbenschieber 250 hat zur Bildung von Steuerkanten vier Steuerkolben 2501 bis 2504, wobei der Steuerkolben 2501 gegenüber den übrigen Steuerkolben einen kleineren Durchmesser aufweist.

Die elektro-hydraulische Steuereinrichtung nach Fig. 4 wirkt in ihrer dargestellten Arbeitsstellung wie folgt: Bei voller Funktion der elektro-hydraulischen Steuerung ist im ersten Gang das zweite Magnetventil 5b von dem elektronischen Steuergerät 4 eingeschaltet, so daß über die Steuerleitung 28 die Schaltventile 21 und 25 gegen den Druck der Federn 219 und 259 umgeschaltet sind. Weiterhin übernimmt die Elektronik die Modulierdruckregelung und die Schaltung der Wandler-Überbrückungskupplung; beides ist in dem vereinfachten Steuerschema nach Fig. 4 nicht dargestellt.

Über die dritte Leitung 20 wird die Kupplung 6 und über die Leitungen 19 und 30 die Kupplung 13 geschlossen. Von der dritten Leitung 20 aus schließt der Systemdruck über die Ringräume 215, 214 und 213 sowie die zweite Leitung 29 die Bremse 10. Über den Ringraum 214 und die erste Leitung 22 wird gleichzeitig das Rückschlagventil 23 geschlossen, so daß der Druck nicht abfallen kann.

Wie aus dem Getriebeplan in Fig. 3 ersichtlich, ist nun der parallel zur Bremse 10 liegende Freilauf 12 überbrückt und das Getriebe kann sowohl Zugals auch Schubmomente vom Motor an die Getriebeausgangswelle und umgekehrt weiterleiten.

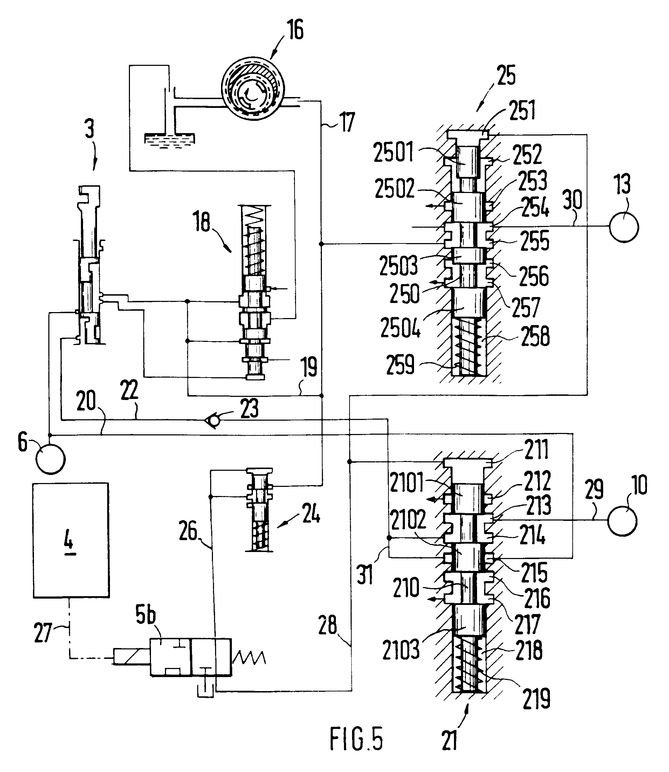

In einer zweiten möglichen Ausgestaltung nach Fig. 5 schließt in der umgeschalteten Stellung der Steuerkolben 2102 den Ringraum 215 ab. Eine vierte Leitung 31 stellt eine Verbindung zwischen den Ringräumen 215 und 214 her. Von der dritten Leitung 20 kann nun der Systemdruck über den Ringraum 215, die vierte Leitung 31, die Ringräume 214 und 213 sowie die zweite Leitung 29 die Bremse 10 schließen.

In einer weiteren, nicht dargestellten Ausgestaltung ist es vorgesehen, das Rückschlagventil 23 in den beschriebenen Ausführungsbeispielen durch einen Stopfen zu ersetzen.

## Patentansprüche

1. Elektro-hydraulische Steuerung für ein Automatgetriebe (1) eines Kraftfahrzeuges,
- wobei das Automatgetriebe (1) mittels eines Wählhebels (2), dessen Wählhebelstellungen P, R, N, D, 3, 2, und 1 einerseits auf ein elektrisches Steuergerät (4) andererseits mechanisch auf einen hydraulischen Schaftschieber (3) übertragen werden, bedienbar ist,
- die Getriebegänge des Automatgetriebes (1) durch Freiläufe sowie druckbeaufschlagbare Kupplungen und druckbeaufschlagbare Bremsen schaltbar sind,
- die Druckbeaufschlagung über mehrere Schaltventile erfolgt, die ihrerseits von dem Schaltschieber (3) und mit dem Steuergerät (4) verbundenen Magnetventilen betätigt werden,
- und im Kraftfluß zum Schalten des ersten Ganges ein Freilauf (12) und eine parallel zum Freilauf (12) liegende Bremse (10) vorgesehen sind,
- wobei vom hydraulischen Schaltschieber (3) eine erste Leitung (22) zu einem Schaltventil (21) und von dort eine zweite Leitung (29) zur Bremse (10) führt,
- das Schaltventil (21) eine sowohl in Wählhebelstellung D als auch in Wählhebelstellung 1 dem ersten Getriebegang zugeordnete Stellung aufweist, in der die erste und die zweite Leitung (22,29) verbunden sind
- und in Wählhebelstellung 1 die erste Leitung (22) durch den hydraulischen Schaltschieber (3) mit Systemdruck beaufschlagt ist,
**dadurch gekennzeichnet**, daß zumindest in der dem ersten Getriebegang zugeordneten Stellung des Schaltventiles (21) unabhängig von der Wählhebelstellung der Systemdruck auf die erste Leitung (22) gegeben wird
- und zumindest bei anliegendem Systemdruck die erste Leitung (22) zum Schaltschieber (3) so verschlossen ist, daß der Systemdruck nicht auf den Schaltschieber gelangt.

2. Elektro-hydraulische Steuerung nach Anspruch 1, **dadurch gekennzeichnet**, daß vom Schaltschieber (3) eine dritte Leitung (20) zum Schaltventil (21) führt, welche in der Wählhebelstellung D mit Systemdruck beaufschlagt ist
- und wobei das Schaltventil (21) in seiner für die Schaltung des ersten Ganges notwendigen Stellung eine Verbindung zwischen der dritten Leitung (20), der ersten Leitung (22) und der zweiten Leitung (29) zu der Bremse (10) herstellt, so daß die Bremse (10) schließt.

3. Elektro-hydraulische Steuerung nach Anspruch 1, **dadurch gekennzeichnet**, daß vom Schaltschieber (3) eine dritte Leitung (20) zum Schaltventil (21) führt, welche in der Wählhebelstellung D mit Systemdruck beaufschlagt ist
- und wobei über eine vierte Leitung (31) eine Verbindung zwischen der dritten Leitung (20) und der ersten Leitung (22) besteht, so daß die Bremse (10) schließt, wenn das Schaltventil (21) in seiner für die Schaltung des ersten Ganges notwendigen Stellung eine Verbindung zwischen der von der dritten Leitung (20) mit Systemdruck versorgten ersten Leitung (22) über die zweite Leitung (29) zu der Bremse (10) herstellt.

4. Elektro-hydraulische Steuerung nach Anspruch 2, **dadurch gekennzeichnet**, daß das die Bremse betätigende Schaltventil (21) aus einer zylindrischen Bohrung mit Ringräumen (211 bis 217) besteht, wobei
- der stirnseitige Ringraum (211) über ein Magnetventil (5b) mit Druck beaufschlagt ist,
- der darauffolgende zweite Ringraum (212) eine Entlüftungsbohrung enthält,
- der dritte Ringraum (213) über die zweite Leitung (29) mit der Bremse (10),
- der vierte Ringraum (214) mit der ersten Leitung (22),
- der fünfte Ringraum (215) mit der dritten Leitung (20) verbunden ist und
- in der Bohrung ein gestufter Steuerschieber (210) geführt ist, der von einer Feder (219) in einer Ruheposition gehalten ist und bei Druckbeaufschlagung des der Feder (219) gegenüberliegenden stirnseitigen Ringraumes (211) sich in eine Arbeitsposition bewegt, so daß jeweils unterschiedliche Ringräume in der Ruhe- bzw. der Arbeitsposition verschlossen sind, und wobei
- die Stufen (2101 bis 2103) des Steuerschiebers (210) die Ringräume (211 bis 217) so verschließen, daß
- in der Ruhestellung die erste Leitung (22) und die zur Bremse (10) führende zweite Leitung (29) gemeinsam über den zweiten Ringraum (212) entlüftet sind und
- in der Arbeitsposition der Ringraum (212) verschlossen ist und die dritte Leitung (20), die erste Leitung (22) und die zur Bremse (10) führende zweite Leitung (29) verbunden sind.

5. Elektro-hydraulische Steuerung nach Anspruch 3, **dadurch gekennzeichnet**, daß das die Bremse betätigende Schaltventil (21) aus einer zylindrischen Bohrung mit Ringräumen (211 bis 217) besteht, wobei
- der stirnseitige Ringraum (211) über ein Magnetventil (5b) mit Druck beaufschlagt ist,
- der darauffolgende zweite Ringraum (212) eine Entlüftungsbohrung enthält,
- der dritte Ringraum (213) über die zweite Leitung (29) mit der Bremse (10),
- der vierte Ringraum (214) mit der ersten Leitung (22),
- der fünfte Ringraum (215) mit der dritten Leitung (20) verbunden ist und
- in der Bohrung ein gestufter Steuerschieber (210) geführt ist, der von einer Feder (219) in einer Ruheposition gehalten ist und bei Druckbeaufschlagung des der Feder (219) gegenüberliegenden stirnseitigen Ringraumes (211) sich in eine dem ersten Getriebegang zugeordnete Arbeitsposition bewegt, so daß jeweils unterschiedliche Ringräume in der Ruhe- bzw. der Arbeitsposition verschlossen sind, und wobei
- die Stufen (2101 bis 2103) des Steuerschiebers (210) die Ringräume (211 bis 217) so verschließen,
daß
- in der Ruhestellung die zur Bremse (10) führende zweite Leitung (29) über den zweiten Ringraum (212) entlüftet ist und
- in der Arbeitsposition der zweite Ringraum (212) verschlossen und die erste Leitung (22) und die zur Bremse (10) führende zweite Leitung (29) verbunden sind.

6. Elektro-hydraulische Steuerung nach Anspruch 1, **dadurch gekennzeichnet**, daß die erste Leitung (22) durch ein Rückschlagventil (23) zum Schaltschieber (3) verschlossen ist.

7. Elektro-hydraulische Steuerung nach Anspruch 1, **dadurch gekennzeichnet**, daß die erste Leitung (22) durch einen Stopfen zum Schaltschieber (3) verschlossen ist.

## Claims

1. An electro-hydraulic control for an automatic gearbox (1) of a motor vehicle,
- wherein the automatic gearbox (1) may be operated by means of a selector lever (2), the selector lever positions P, R, N, D, 3, 2 and 1 of which are transmitted on the one hand to an electrical control device (4) and on the other hand mechanically to a hydraulic gear change slide valve (3),
- the gears of the automatic gearbox (1) may be changed by means of freewheels and pressure-operable couplings and pressure-operable brakes,
- the pressure is admitted by way of several gear change valves which are themselves operated by the gear change slide valve (3) and solenoid valves connected to the control device (4),
- and a freewheel (12) and a brake (10) lying parallel to the freewheel (12) are provided in the power train for engaging the first gear,
- wherein a first line (22) runs from the hydraulic gear change slide valve (3) to a gear change valve (21) and from there a second line (29) runs to the brake (10),
- the gear change valve (21) occupies both in selector lever position D and in selector lever position 1 a position associated with the first gear in which the first and the second line (22, 29) are connected
- and in selector lever position 1 the first line (22) is acted upon with system pressure by the hydraulic gear change slide valve (3),
characterized in that at least in the position of the gear change valve (21) associated with the first gear, the system pressure is applied to the first line (22) irrespective of the selector lever position
- and at least with the system pressure applied, the first line (22) to the gear change slide valve (3) is closed in such a way that the system pressure does not reach the gear change slide valve.

2. An electro-hydraulic control according to claim 1, characterized in that a third line (20) runs from the gear change slide valve (3) to the gear change valve (21), this line being acted upon with system pressure in selector lever position D,
- and wherein the gear change valve (21), in the position thereof necessary for engaging the first gear, establishes a connection between the third line (20), the first line (22) and the second line (29) to the brake (10), so that the brake (10) is actuated.

3. An electro-hydraulic control according to claim 1, characterized in that a third line (20) runs from the gear change slide valve (3) to the gear change valve (21), this line being acted upon with system pressure in selector lever position D,
- and wherein via a fourth line (31) there is a connection between the third line (20) and the first line (22), with the result that the brake (10) is actuated when the gear change valve (21), in the position thereof necessary for engaging the first gear, establishes a connection between the first line (22) supplied with system pressure by the third line (20) by way of the second line (29) to the brake (10).

4. An electro-hydraulic control according to claim 2, characterized in that the gear change valve (21) operating the brake consists of a cylindrical bore with annular chambers (211 to 217), wherein
- the front annular chamber (211) is acted upon with pressure by way of a solenoid valve (5b),
- the second annular chamber (212) which follows it comprises a venting bore,
- the third annular chamber (213) is connected by way of the second line (29) to the brake (10),
- the fourth annular chamber (214) is connected to the first line (22),
- the fifth annular chamber (215) is connected to the third line (20), and guided in the bore is a stepped control slide valve (210) which is held in an inoperative position by a spring (219) and which, when the front annular chamber (211) situated opposite the spring (219) is acted upon with pressure, moves into an operative position, with the result that different annular chambers are respectively closed in the inoperative or in the operative position, and wherein
- the steps (2101 to 2103) of the control slide valve (210) close the annular chambers (211 to 217) such that
- in the inoperative position the first line (22) and the second line (29) leading to the brake (10) are jointly vented via the second annular chamber (212) and
- in the operative position the annular chamber (212) is closed and the third line (20), the first line (22) and the second line (29) leading to the brake (10) are connected.

5. An electro-hydraulic control according to claim 3, characterized in that the gear change valve (21) operating the brake is composed of a cylindrical bore with annular chambers (211 to 217), wherein
- the front annular chamber (211) is acted upon with pressure by way of a solenoid valve (5b),
- the second annular chamber (212) which follows it comprises a venting bore,
- the third annular chamber (213) is connected by way of the second line (29) to the brake (10),
- the fourth annular chamber (214) is connected to the first line (22),
- the fifth annular chamber (215) is connected to the third line (20), and
- guided in the bore is a stepped control slide valve (210) which is held in an inoperative position by a spring (219) and which, when the front annular chamber (211) situated opposite the spring (219) is acted upon with pressure, moves into an operative position associated with the first gear, with the result that different annular chambers are respectively closed in the inoperative or in the operative position, and wherein
- the steps (2101 to 2103) of the control slide valve (210) close the annular chambers (211 to 217) such that
- in the inoperative position the second line (29) leading to the brake (10) is vented by way of the second annular chamber (212), and
- in the operative position the second annular chamber (212) is closed and the first line (22) and the second line (29) leading to the brake (10) are connected.

6. An electro-hydraulic control according to claim 1, characterized in that the first line (22) is closed to the gear-change slide valve (3) by a non-return valve (23).

7. An electro-hydraulic control according to claim 1, characterized in that the first line (22) is closed to the gear-change slide valve (3) by a tap.

## Revendications

1. Commande électro-hydraulique d'une boîte de vitesses automatique (1) d'un véhicule automobile,
- dans laquelle la boîte de vitesses automatique (1) peut être commandée au moyen d'un levier de sélection (2), dont les positions P, R, N, D, 3, 2 et 1 sont transmises d'une part à un appareil de commande (4) électrique, d'autre part mécaniquement à un curseur de commutation de manoeuvre (3) hydraulique,
- les rapports de la boîte de vitesses automatique (1) peuvent être commandés par des roues libres ainsi que par des accouplements soumis à pression et des freins soumis à pression,
- la mise sous pression s'effectue par l'intermédiaire de plusieurs soupapes de commutation, qui de leur côté sont actionnées par le curseur de commutation (3) et des soupapes magnétiques, reliées à l'appareil de commande (4),
- et sont prévus dans le flux des forces, pour la commande du premier rapport, une roue libre (12) et un frein (10), parallèle à la roue libre (12),
- dans laquelle, du curseur de commutation (3) hydraulique, une première conduite (22) mène à une soupape de commutation (21) et de là, une seconde conduite (29) mène au frein (10), la soupape de commutation (21) présente, dans la position D ainsi que dans la position (1) du levier de sélection, une position associée au premier rapport de la boîte de vitesses, dans laquelle la première et la seconde conduite (22, 29) sont reliées
- et dans la position (1) du levier de sélection, la première conduite (22) reçoit la pression du système, par le curseur de commutation (3) hydraulique,
caractérisée en ce qu'au moins dans la première position de la soupape de commutation (21), correspondant au premier rapport, la première conduite (22) reçoit la pression du système, indépendamment de la position du levier de sélection
- et au moins lorsque s'applique la pression du système, la première conduite (22), menant au curseur de commutation (3), est fermée de manière que la pression du système ne parvienne pas au curseur.

2. Commande électro-hydraulique selon la revendication 1, caractérisée en ce que du curseur de commutation (3) une troisième conduite (20) mène à la soupape de commutation (21), qui dans la position D du levier de sélection, reçoit la pression du système
- et dans laquelle la soupape de commutation (21), dans sa position nécessaire à la commande du premier rapport, établit une liaison entre la troisième conduite (20), la première conduite (22) et la deuxième conduite (29) vers le frein (10), ce qui a pour effet de fermer le frein (10).

3. Commande électro-hydraulique selon la revendication 1, caractérisée en ce que du curseur de commutation (3) une troisième conduite (20) mène à la soupape de commutation (21), qui dans la position D du levier de sélection, reçoit la pression du système
- et dans laquelle, par une quatrième conduite (31), une liaison est réalisée entre la troisième conduite (20) et la première conduite (22), de sorte que le frein (10) se ferme, lorsque la soupape de commutation (21) dans sa position nécessaire à la commande du premier rapport, établit une liaison entre la première conduite (22), alimentée avec la pression du système par la troisième conduite (20), et le frein (10), par l'intermédiaire de la deuxième conduite (29).

4. Commande électro-hydraulique selon la revendication 2, caractérisée en ce que la soupape de commutation (21), actionnant le frein est constituée d'un alésage cylindrique avec chambres annulaires (211 à 217), dans laquelle
- la chambre annulaire (221) frontale reçoit la pression par l'intermédiaire d'une soupape magnétique (5b),
- la deuxième chambre annulaire (212) suivante contient un alésage de purge d'air,
- la troisième chambre annulaire (213) est reliée par la deuxième conduite (29) avec le frein (10),
- la quatrième chambre annulaire (214) avec la première conduite (22),
- la cinquième chambre annulaire (215) avec la troisième conduite (20) et
- dans l'alésage est guidé un curseur de commande (210) à gradins qui est maintenu par un ressort (219) dans une position de repos et qui se déplace dans une position de travail, lorsque la chambre annulaire (211) frontale, faisant face au ressort (219) est alimentée en pression, ce qui fait que des chambres annulaires différentes sont fermées dans la position de repos ou dans la position de travail, et dans laquelle
- les gradins (2101 à 2103) du curseur de commande (210) ferment les chambres annulaires (211 à 217) de manière que
- dans la position de repos, la première conduite (22) et la deuxième conduite (29), menant au frein (10), sont purgées conjointement par l'intermédiaire de la seconde chambre annulaire (212) et
- dans la position de travail la chambre annulaire (212) est fermée et la troisième conduite (20), la première conduite (22) et la deuxième conduite (29) menant au frein (10), sont reliées.

5. Commande électro-hydraulique selon la revendication 3, caractérisée en ce que la soupape de commutation (21), actionnant le frein est constituée d'un alésage cylindrique avec chambres annulaires (211 à 217), dans laquelle
- la chambre annulaire (221) frontale reçoit la pression par l'intermédiaire d'une soupape magnétique (5b),
- la deuxième chambre annulaire (212) suivante contient un alésage de purge d'air,
- la troisième chambre annulaire (213) est reliée par la deuxième conduite (29) avec le frein (10),
- la quatrième chambre annulaire (214) avec la première conduite (22),
- la cinquième chambre annulaire (215) avec la troisième conduite (20) et
- dans l'alésage est guidé un curseur de commande (210) à gradins qui est maintenu par un ressort (219) dans une position de repos et qui se déplace dans une position de travail associée au premier rapport lorsque la chambre annulaire (211) frontale, faisant face au ressort (219) est alimentée en pression, ce qui fait que des chambres annulaires différentes sont fermées dans la position de repos ou dans la position de travail, et dans laquelle
- les gradins (2101 à 2103) du curseur de commande (210) ferment les chambres annulaires (211 à 217) de manière que
- dans la position de repos, la première conduite (22) et la deuxième conduite (29), menant au frein (10), sont purgées conjointement par l'intermédiaire de la seconde chambre annulaire (212) et
- dans la position de travail, la chambre annulaire (212) est fermée et la troisième conduite (20), la première conduite (22) et la deuxième conduite (29) menant au frein (10), sont reliées.

6. Commande électro-hydraulique selon la revendication 1, caractérisée en ce que la première conduite (22) est fermée vers le curseur de commutation (3), par une soupape de non-retour (23).

7. Commande électro-hydraulique selon la revendication 1, caractérisée en ce que la première conduite (22) est fermée vers le curseur de commutation (3), par un bouchon.
